# EUROPEAN PATENT SPECIFICATION

(11) **EP 2 633 191 B1**
(45) Date of publication and mention of the grant of the patent: **01.04.2015**
(21) Application number: 11770270.4
(22) Date of filing: 29.09.2011
(51) Int. Cl.: F03D 11/00, F03D 1/00, F03D 7/02, F03D 1/06

(54) **Wind turbine blade mounting system**
Montagesystem für Windturbinenblätter
Système de montage de pales d'éolienne

(30) Priority: 30.09.2010 US 388030 P
(43) Date of publication of application: 04.09.2013
(73) Proprietor: The Timken Company, Canton, OH 44706-0930 (US)
(72) Inventor: FOX, Gerald, P., Massillon, OH 44646 (US)
(74) Representative: Marles, Alan David
(86) International application number: PCT/US2011/053890
(87) International publication number: WO 2012/044771

(56) References cited:
- DE-C1- 3 738 216
- DE-C1- 3 922 199
- JP-A- 2006 152 862

## Description

### BACKGROUND OF THE INVENTION

The present disclosure is related generally to variable pitch wind turbine blade mounting systems, and in particular to a variable pitch wind-turbine blade mounting system that provides a large bearing capacity in a smaller diameter, incorporates a self-locking taper on the wind-turbine blade root, and which is configured to permit raising and connecting of a variable-pitch wind-turbine blade to a wind turbine nose cone structure using an on board hoist, mounted in the wind turbine nacelle, instead of an external crane.

Conventional horizontal-axis wind-turbines are normally constructed with two or three turbine blades. Some designs incorporate a pitch control mechanism in the rotating nose cone structure to selectively oscillate each turbine blade with angular movement along its radial axis (from root to tip) so that the turbine blade surface is optimally orientated to address the direction of the wind to capture power or to mitigate machine vibration.

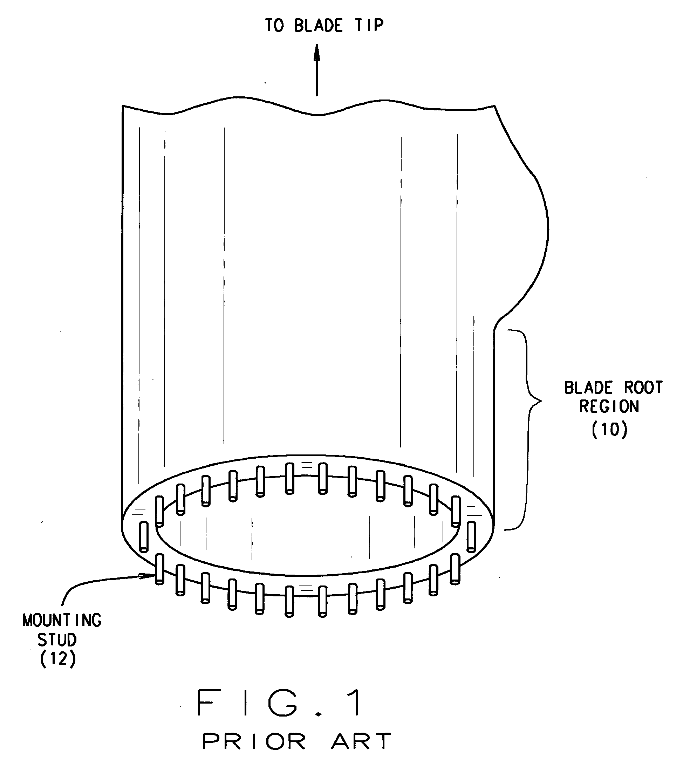

To enable this, the turbine blades are each attached at a blade root by projecting studs as seen in Figure 1, to a nose cone structure that rotates on a somewhat horizontal prop axis. This subassembly of the nose cone, with the wind turbine blades attached, forms the turbine structure which is also referred to as a main rotor assembly, and which is subsequently mounted onto a turbine nacelle housing various power transmission unit components for converting the rotational energy of the turbine structure into electrical power. This turbine structure captures power from the wind, and transfers it into the remainder of the power transmission unit and ultimately into a generator for conversion into electrical power.

In order to facilitate relative oscillation between each turbine blade and the nose cone structure, a blade root bearing, usually consisting of either a single or double row large-diameter ball bearing, is mounted between the root of each turbine blade and a corresponding flange on the nose cone. The blade root bearing is normally connected to a nose cone flange using bolts or cap screws which are passed through a mating bolt circle on the outer race of the bearing.

Such connections are for example disclosed in DE 39 22 199 and JP2006152862.

During traditional assembly procedures for a wind turbine main rotor assembly, the blade root bearings are mounted onto the nose cone flanges first, then lifted up-tower to the wind turbine nacelle, together with other preassembled components inside the nose cone structure, using an external crane. One by one, each blade is hoisted into the air, stud end up, always with at least one external crane, where the projecting studs from the blade root are carefully lined up with, and affixed with, a mating bolt circle machined into the inner race of the previously installed blade root bearing.

There are apparent drawbacks to using such conventional designs for wind turbine blade mounting systems. The first is that a large, costly-to-use external crane must be brought on site to lift the turbine blade up to the height of the nose cone to facilitate the careful assembly. Second, in order to match the diameter of the blade root bearing inner race bolt circle, the diameter of the turbine blade at the root must often be increased beyond that which would otherwise be required based exclusively on the loading requirements for the wind turbine blade itself. This results in the turbine blade becoming larger in diameter and more expensive then it necessarily has to be.

Accordingly, it would be advantageous to provide a variable pitch wind turbine blade mounting system for use with variable pitch wind turbine blades which is configured to facilitate assembly and disassembly of the turbine blade from a nose cone mounting, and which incorporates a high capacity bearing configured to accommodate reduced diameter wind turbine blade roots which are sized according to anticipated loads.

### BRIEF SUMMARY OF THE INVENTION

Briefly stated, the present disclosure provides a wind turbine blade mounting system for use with variable-pitch wind turbine blades having reduced diameter tapered blade roots. For each wind turbine blade, the mounting system incorporates a high capacity bearing configured to engage a self-locking tapered section of an associated wind turbine blade root to facilitate assembly and disassembly of the wind turbine blades from a nose cone mounting.

In one embodiment, the high capacity bearings in the wind turbine blade mounting system each include an outwardly opening tapered inner sleeve adapted to receive the matching tapered section of the associated wind turbine blade root in a self-locking engagement when the wind turbine blade is hoisted up-tower. The high capacity bearing effectively couples the wind turbine blade to a bull gear and pinion assembly within the wind turbine nose cone through which pitch control adjustments are made about the blade axis. The tapered inner sleeve is in turn rotationally coupled through a bearing mounting to a bearing cartridge secured to the turbine nose cone structure, allowing for rotational movement of the tapered inner sleeve and the wind turbine blade root about a rotational axis of the wind turbine blade in response to blade pitch adjustments driven by rotation of the bull gear.

To facilitate assembly and disassembly, one or more hoist pins pass through the nose cone bull gear and into the wind turbine blade root to secure the wind turbine blade in position within the tapered inner sleeve. Each hoist pin is adapted at an exposed end to receive hoist cables, thereby enabling the raising and lowering of the wind turbine blades into position within the tapered inner sleeve of the high capacity bearing without removal of the nose cone assembly from the wind turbine nacelle.

The foregoing features, and advantages set forth in the present disclosure as well as presently preferred embodiments will become more apparent from the reading of the following description in connection with the accompanying drawings.

### BRIEF DESCRIPTION OF THE SEVERAL VIEWS OF THE DRAWINGS

In the accompanying drawings which form part of the specification:
Figure 1 is a perspective view of a prior art wind turbine blade root region; and
Figure 2 is a partial sectional view of a variable pitch wind turbine blade root region and high-capacity bearing assembly comprising the mounting system of the present disclosure.

Corresponding reference numerals indicate corresponding parts throughout the several figures of the drawings. It is to be understood that the drawings are for illustrating the concepts set forth in the present disclosure and are not to scale.

Before any embodiments of the invention are explained in detail, it is to be understood that the invention is not limited in its application to the details of construction and the arrangement of components set forth in the following description or illustrated in the drawings.

### DETAILED DESCRIPTION

The following detailed description illustrates the invention by way of example and not by way of limitation. The description enables one skilled in the art to make and use the present disclosure, and describes several embodiments, adaptations, variations, alternatives, and uses of the present disclosure, including what is presently believed to be the best mode of carrying out the present disclosure.

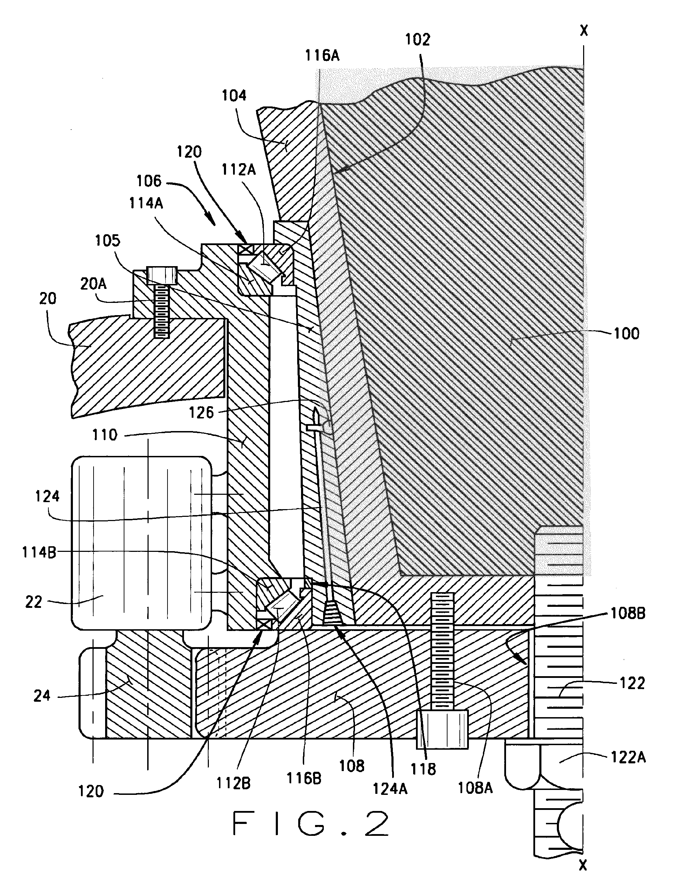

Turning to the figures, and to Figures 1 and 2 in particular, a prior art design of a wind turbine blade root region 10, shown in Figure 1 with projecting mounting studs 12 for coupling to a bolt circle on an inner race of a supporting bearing, is replaced as shown in Figure 2 with a variable pitch wind turbine blade 100 having an inwardly tapered blade root 102. The blade root 102 is shown with an outer surface defined by a tapered shank section 104 seated within a tapered inner sleeve 105 of a high capacity bearing assembly 106. The wind turbine blade is coupled to a wind turbine blade pitch control system fitted to the nose cone structure 20 of a wind turbine nacelle (not shown), which rotates about a prop axis of rotation perpendicular to a blade axis X-X. The orientation of Figure 2 is shown with a wind turbine blade tip pointed upward, along the blade axis X-X, and with the wind turbine blade root 102 secured to a bull gear 108 by a set of bolts 108A disposed in a bolt circle about the axial end of the wind turbine blade root 102, each of which passes through the base of the tapered shank section 104. The taper on the outer surface of the blade root shank section 104 is selected to be self-locking with the tapered inner sleeve 105 of the bearing assembly, with a slope ratio such as 1:12. The tapered shank section 104 is shown as a steel sleeve enclosing the wind turbine blade root 102, but those of ordinary skill will recognize that the tapered shank section 104 may be composed of another suitable material as well, and may be secured to, integrated with, or bonded to, the wind turbine blade root 102 by any suitable means.

For each individual variable-pitch wind turbine blade 100 coupled to a nose cone structure 20, the associated high capacity bearing assembly 106 is comprised of several elements, including the outwardly-opening tapered inner sleeve 105 which provides support for the pitch rotation of the wind turbine blade 100 about the blade axis X-X relative to an outer cylindrical cartridge 110 of the bearing assembly 106. The bearing outer cartridge 110, as shown in Figure 2, is secured to the nose cone structure 20, such as by a series of cap screws 20A, and supports two rows of tapered rolling elements 112A and 112B on an inner circumference in an indirect mounting arrangement about the outer circumference of the tapered inner sleeve 105. The first row of tapered rolling elements 112A are captured between an outer race 114A and an inner race 116A. The second row of tapered rolling elements 112B are axially spaced from the first row, and are similarly captured between an outer race 114B and an inner race 116B.

Internal clearance or preload on the inner races 116A and 116B is established by the dimensions of an annular spacer 118 which is disposed between one of the inner races (shown as 116B in Fig. 2) and the tapered inner sleeve 105. The high capacity bearing assembly 106 is preferably greased or lubricated, and sealed as shown in Fig. 2 by suitable axial end seals 120. Those of ordinary skill in the art will recognize that the bearing outer cartridge 110 may be configured to support bearings of a different configuration from that shown in Figure 2, such as in a direct mounting, and may employ additional rows of rolling elements, as well as different types of rolling elements, without departing from the self-locking tapered engagement of the wind turbine blade set forth by the present disclosure.

Preferably, the inside circumferential surface of the tapered inner sleeve 105 has the same self-locking taper alignment as the exterior surface of the tapered shank section 104 of the wind turbine blade 100, such as a 1:12 taper. As previously noted, once in locked engagement with the tapered surfaces, the variable-pitch wind turbine blade 100 is secured to the bull gear 108 at the axial end of the tapered inner sleeve 105 by a plurality of spaced cap screws or bolts 108A, while the entire high-capacity bearing assembly 106 for each wind turbine blade 100 is secured onto a flat boss on the outer surface of the nose cone 20, such-as with cap screws 20A. Various turbine blade pitch control system components may be contained within the nose cone 20, including on or more pitch control motors 22 which are configured to drive bull pinion gears 24 engaged with each of the bull gears 108.

The radial and thrust capacity of the tapered roller bearings 112A and 112B shown in Figure 2 are substantially higher than that of equivalently sized ball bearings. Assuming that the diameter of the variable-pitch wind turbine blade root is dictated by the loading capacity of the supporting bearing assembly, and not by the wind turbine blade root loading requirements, using a higher capacity and smaller diameter bearing assembly 106 to support the wind turbine blade root 102 in the nose cone assembly makes it possible to reduce the outer diameter of the wind turbine blade 100 at the root. This further makes it possible to downsize the entire blade pitch drive system in the nose cone 20 and correspondingly, the size and weight of the nose cone 20 as well. Reductions in size and weight for the components of a wind turbine becomes increasingly important as wind turbines increase in size and capacity, and require higher capacity blade root bearings to support the increasing forces applied to and by the wind turbine blade 100. Unlike traditional two-row ball bearing assemblies where both rows of balls are most often conjoined, the two rows of the smaller diameter tapered roller bearing assembly 106, such as shown in Figure 2 are preferably separated by some distance along the axis X-X of the wind turbine blade 100, to create an axial spread and an ability for the bearing assembly 106 provide a substantial overturning moment capability, even though the bearing assembly 106 is smaller in diameter then a traditional ball bearing assembly.

Using the variable pitch wind turbine blade mounting system of the present disclosure, installation of a variable pitch wind turbine blade assembly 100 into the inner tapered sleeve 105 of an associated bearing assembly 106 begins with the initial installation of the nose cone structure 20 and associated power transmission and turbine blade pitch controls systems in the wind turbine up-tower nacelle. Each individual bearing assembly 106 is installed with the nose cone 20, such that the associated tapered inner sleeves 104 each open outwardly along the axis X-X for receiving a variable-pitch wind turbine blade 100.

To facilitate lifting and installation of the wind turbine blades 100 up tower, each wind turbine blade receives a substantial hoist pin 122 which is threaded axially into the wind turbine blade root, through the shank 104. A cable and hook from a hoist in the wind turbine nacelle (not shown) is directed through an axial hole 108B in the associated bull gear 108, axially through the tapered inner sleeve 105 of the bearing assembly 106, and is lowered to the ground where it is attached to the hoist pin 122. Once secured, the hoist in the nacelle is activated to draw the wind turbine blade 100 upward until the hoist pin passes through the bore of the tapered inner sleeve 105 and the axial hole 108B of the bull gear 108, allowing the self-locking tapers of the wind turbine blade root shank 104 and tapered inner sleeve 105 to achieve imminent contact. A locking nut 122A, through which the hoist cable has been previously passed, is then drawn down to, and threaded axially onto, the hoist pin 122 into a loose contact with the bull gear 108 as a temporary safety measure.

With imminent contact established between the bearing tapered inner sleeve 105 and the shank 104 of the wind turbine blade root, any required minor angular orientation adjustments to the wind turbine blade necessary to gain alignment with the clearance hole 108B in the bull gear 108 and the a plurality of bolts 108A can be inserted through the bull gear 108 and fastened securely in an appropriate manner around a bolt circle of the wind turbine blade 100. Preferably, bolts 108A are high strength, high tension fasteners, and are configured to draw the self-locking tapers of the tapered inner sleeve 105 and blade root shank 104 into coaxial engagement, substantially securing the wind turbine blade root 102 within the bearing tapered inner sleeve 105. Once secured, the locking nut 122A, crane hook, and cable are disconnected and removed. The process is repeated for each individual variable-pitch wind turbine blade 100 to be installed on the wind turbine.

Once assembled, the proper orientation of the variable pitch wind turbine blade 100 is preferably established by driving the bull gear 108 with the bull pinion 24 using a suitable motor 22 positioned within the nose cone 20. The system can be designed for pitch control where all of the wind turbine blades 100 coupled to the nose cone 20 are adjusted in unison and oscillated in a common direction. Alternatively, the system can be designed for pitch control with a control logic that adjusts each variable pitch wind turbine blade 100 independently, to optimize machine efficiency and dynamic behavior. Those of ordinary skill in the art will recognize that a variety of pitch control systems may be employed to selectively alter the orientation of the wind turbine blades 100 about the associated blade axis X-X without departing from the scope of the disclosure.

Removal of a variable pitch wind turbine blade 100 from the mounting system is substantially the reverse of the installation process, but may be facilitated by applying a separating hydraulic pressure to the interface between the tapered inner sleeve 105 and the wind turbine blade root shank 104. The hydraulic pressure may be applied through a port or passage 124 passing through the tapered inner sleeve 105 from an axial end surface adjacent to the bull gear 108 and terminating at a channel or groove 126 which extends about the inner circumferential surface of the tapered inner sleeve 105. When not in use, the axial end of the port 124 may be sealed by a temporary plug 124A, which is removed when access is required. To apply the hydraulic pressure, a suitable fitting (not shown) is inserted into the open plug hole of the port 124 and connected to a high pressure hydraulic system. Concurrently, a cable is strung through the locking nut 122A which is needed if a new wind turbine blade 100 is to hoisted up later. In a reverse of the installation procedure, the hook and hoist cable are connected to the hoist pin, leaving moderate slack in the cable, and the various bolts 108A securing the wind turbine blade 100 to the bull gear 108 are loosened. Hydraulic pressure is then applied through the port 124 to the circumferential groove 126 in the inner surface of the tapered inner sleeve 105. The hydraulic pressure applies a shock to the interface between the tapered inner sleeve 105 and the wind turbine blade root shank 104, jolting the wind turbine blade loose for disconnection. Once disconnection takes place, the bolts 108A are removed, and the weight of the wind turbine blade 100 is solely supported by the hoist pin 122 and the coupled hook and cable, allowing the wind turbine blade 100 to be lowered to the ground.

As various changes could be made in the above constructions without departing from the scope of the disclosure, it is intended that all matter contained in the above description or shown in the accompanying drawings shall be interpreted as illustrative and not in a limiting sense.

## Claims

1. A wind turbine blade mounting system for use with variable-pitch wind turbine blades (100) having tapered blade roots, **characterized by** comprising:
a high capacity bearing assembly (106) mounted in a wind turbine nose cone structure (20) for each wind turbine blade (100), each high capacity bearing assembly configured with an outwardly opening tapered inner sleeve (105) to co-axially engage a tapered shank section (104) of an associated wind turbine blade in a self-locking coupling for rotation about a blade axis X-X perpendicular to a nose cone prop axis of rotation, thereby facilitating assembly and disassembly of the wind turbine blades from the wind turbine nose cone structure (20).

2. The wind turbine blade mounting system of Claim 1 wherein each high capacity bearing assembly (106) includes a set of rolling elements (112A, 112B) disposed within inner and outer races (114, 116) between the tapered inner sleeve (105) and a supporting bearing cartridge (110) coupled to said nose cone structure (20), said set of rolling elements enabling said tapered inner sleeve (105) and a coupled tapered shank section (104) of a wind turbine blade (100) to rotate about the blade axis X-X for blade pitch control;

3. The wind turbine blade mounting system of Claim 2 wherein a preload setting on said set of rolling elements (112A, 112B) is selected by an annular spacer (118) disposed between said tapered inner sleeve (105) and an inner race (116A, 116B).

4. The wind turbine blade mounting system of Claim 2 wherein said tapered shank section (104) of said wind turbine blade (100) is axially coupled to a bull gear (108), said bull gear (108) configured to be rotationally driven about said blade axis X-X to enable pitch adjustment of said wind turbine blade (100).

5. The wind turbine blade mounting system of Claim 2 wherein said set of rolling elements (112A, 112B) are disposed in a plurality of axially spaced rows.

6. The wind turbine blade mounting system of Claim 5 wherein said set of rolling elements (112A, 112B) includes at least two rows of tapered rollers arranged in an indirect mounting configuration.

7. The wind turbine blade mounting system of Claim 6 wherein said set of rolling elements (112A, 112B) includes at least two rows of tapered rollers arranged in a direct mounting configuration.

8. The wind turbine blade mounting system of Claim 1 further including a hoist pin (122) axially coupled to an axial end of the tapered shank section (104) of the wind turbine blade (100), said hoist pin adapted to removably couple to a hoist cable to facilitate engaging and disengaging said tapered shank section (104) from said tapered inner sleeve (105) of said bearing assembly (106).

9. The wind turbine blade mounting system of Claim 1 wherein said tapered inner sleeve (105) and said bearing assembly (106) are rotationally carried about a prop axis of rotation by the nose cone structure 20.

10. The wind turbine blade mounting system of Claim 1 wherein said tapered inner sleeve (105) includes at least one axially directed passage (124) extending from a base end surface to a circumferential channel (126) on said tapered inner surface, said axially directed passage configured to receive a flow of hydraulic fluid from said base end for delivery to an interface between said tapered inner surface and a tapered shank section (104) of an installed wind turbine blade (100) seated therein to facilitate release of said self-locking taper during disengagement of said wind turbine blade from said tapered inner sleeve (105).

11. The wind turbine blade mounting system of Claim 1 wherein said tapered inner sleeve (105) and said tapered shank section (104) of said wind turbine blade have a locking taper with a 1:12 slope ratio.

12. A method for installation of a variable-pitch wind turbine blade (100) to a pitch-adjustable nose cone structure (20), **characterized by**:
providing, for each variable-pitch wind turbine blade associated with said nose cone structure (20), a high capacity bearing assembly (106), each high capacity bearing assembly configured with an outwardly opening tapered inner sleeve (105) to co-axially engage a tapered shank section (104) of an associated wind turbine blade in a self-locking coupling for rotation about a blade axis X-X perpendicular to a nose cone prop axis of rotation,
seating said tapered shank section (104) of said variable-pitch wind turbine blade (100) coaxially within said tapered inner sleeve (105) of said high capacity bearing assembly (106); and
drawing said tapered shank section (104) into locking engagement with said tapered inner sleeve (105).

13. The method for installation of Claim 12 further including the step of securing said wind turbine blade (100) in said locking engagement with said tapered inner sleeve (105) of said high capacity bearing assembly (106) with a plurality of axially directed bolts.

## Patentansprüche

1. Windturbinenflügel-Montagesystem zur Verwendung mit Windturbinenflügeln (100) mit veränderlicher Steigung und konischen Flügelfüßen, **dadurch gekennzeichnet, dass** es Folgendes umfasst:
eine Lagerbaugruppe (106) hoher Kapazität, die in einer Windturbinennasenkegel-Struktur (20) für jeden Windturbinenflügel (100) montiert ist, wobei jede Lagerbaugruppe hoher Kapazität mit einer nach außen öffnenden konischen Innenhülse (105) konfiguriert ist, die koaxial in einen konischen Schaftabschnitt (104) eines assoziierten Windturbinenflügels in einer selbstsichernden Kupplung zur Rotation um eine Flügelachse X-X lotrecht zu einer Nasenkonus-Propellerdrehachse koaxial eingreift, um dadurch das Montieren und Demontieren der Windturbinenflügel an/von der Windturbinennasenkegel-Struktur (20) zu erleichtern.

2. Windturbinenflügel-Montagesystem nach Anspruch 1, wobei jede Lagerbaugruppe (106) hoher Kapazität einen Satz Wälzkörper (112A, 112B) aufweist, die in inneren und äußeren Laufringen (114, 116) zwischen der konischen Innenhülse (105) und einer Traglagerkassette (110) angeordnet ist, die mit der genannten Nasenkegelstruktur (20) gekoppelt ist, wobei der genannte Wälzkörpersatz eine Rotation der genannten konischen Innenhülse (105) und eines gekoppelten konischen Schaftabschnitts (104) eines Windturbinenflügels (100) um die Flügelachse X-X für eine Regulierung der Flügelsteigung zulässt.

3. Windturbinenflügel-Montagesystem nach Anspruch 2, wobei eine Vorspannungseinstellung an dem genannten Wälzkörpersatz (112A, 112B) von einem ringförmigen Abstandshalter (118) gewählt wird, der zwischen der genannten konischen Innenhülse (105) und einem inneren Laufring (116A, 116B) angeordnet ist.

4. Windturbinenflügel-Montagesystem nach Anspruch 2, wobei der genannte konische Schaftabschnitt (104) des genannten Windturbinenflügels (100) axial mit einem Großzahnrad (108) gekoppelt ist, wobei das genannte Großzahnrad (108) so konfiguriert ist, dass es um die genannte Flügelachse X-X gedreht werden kann, um eine Steigungseinstellung des genannten Windturbinenflügels (100) zu ermöglichen.

5. Windturbinenflügel-Montagesystem nach Anspruch 2, wobei der genannte Wälzkörpersatz (112A, 112B) in mehreren axial beabstandeten Reihen angeordnet ist.

6. Windturbinenflügel-Montagesystem nach Anspruch 5, wobei der genannte Wälzkörpersatz (112A, 112B) wenigstens zwei Reihen von konischen Rollen aufweist, die in einer indirekten Montagekonfiguration angeordnet sind.

7. Windturbinenflügel-Montagesystem nach Anspruch 6, wobei der genannte Wälzkörpersatz (112A, 112B) wenigstens zwei Reihen konische Rollen beinhaltet, die in einer direkten Montagekonfiguration angeordnet sind.

8. Windturbinenflügel-Montagesystem nach Anspruch 1, das ferner einen Hubbolzen (122) aufweist, der axial mit einem axialen Ende des konischen Schaftabschnitts (104) des Windturbinenflügels (100) gekoppelt ist, wobei der genannte Hubbolzen so ausgelegt ist, dass er entfernbar mit einem Hubseil gekoppelt werden kann, um das Ein- und Ausrücken des genannten konischen Schaftabschnitts (104) in die/aus der genannten konischen Innenhülse (105) der genannten Lagerbaugruppe (106) zu erleichtern.

9. Windturbinenflügel-Montagesystem nach Anspruch 1, wobei die genannte konische Innenhülse (105) und die genannte Lagerbaugruppe (106) durch die Nasenkegelstruktur 20 um eine Propellerdrehachse drehbar getragen werden.

10. Windturbinenflügel-Montagesystem nach Anspruch 1, wobei die genannte konische Innenhülse (105) wenigstens einen axial gerichteten Durchhang (124) aufweist, der von einer Basisendfläche zu einem Urnfangskanal (126) auf der genannten konischen Innenfläche verläuft, wobei der genannte axial gerichtete Durchhang zum Aufnehmen eines Hydraulikfluidflusses von dem genannten Basisende zur Zuführung zu einer Schnittstelle zwischen der genannten konischen Innenfläche und einem konischen Schaftabschnitt (104) eines darin sitzenden installierten Windturbinenflügels (100) konfiguriert ist, um das Lösen des genannten selbstsichernden Kegels beim Ausrücken des genannten Windturbinenflügels aus der genannten konischen Innenhülse (105) zu erleichtern.

11. Windturbinenflügel-Montagesystem nach Anspruch 1, wobei die genannte konische Innenhülse (105) und der genannte konische Schaftabschnitt (104) des genannten Windturbinenflügels einen Verriegelungskonus mit einem Steigungsverhältnis von 1:12 haben.

12. Verfahren zum Installieren eines Windturbinenflügels (100) mit veränderlicher Steigung an einer Nasenkegelstruktur (20) mit verstellbarer Steigung, gekennzeichnet durch:
Bereitstellen, für jeden mit der genannten Nasenkegelstruktur (20) assoziierten Windturbinenflügel mit veränderlicher Steigung, einer Lagerbaugruppe (106) mit hoher Kapazität, wobei jede Lagerbaugruppe mit hoher Kapazität mit einer nach außen öffnenden konischen Innenhülse (105) konfiguriert ist, um koaxial in einen konischen Schaftabschnitt (104) eines assoziierten Windturbinenflügels in einer selbstsichernden Kupplung zur Rotation um eine Flügelachse X-X lotrecht zu einer Nasenkegel-Propellerdrehachse einzugreifen,
Einsetzen des genannten konischen Schaftabschnitts (104) des genannten Windturbinenflügels (100) mit veränderlicher Steigung koaxial in die genannte konische Innenhülse (105) der genannten Lagerbaugruppe (106) mit hoher Kapazität; und
Ziehen des genannten konischen Schaftabschnitts (104) in einen Verriegelungseingriff mit der genannten konischen Innenhülse (105).

13. Installationsverfahren nach Anspruch 12, das ferner den Schritt des Sicherns des genannten Windturbinenflügels (100) in dem genannten Verriegelungseingriff mit der genannten konischen Innenhülse (105) der Lagerbaugruppe (106) mit hoher Kapazität mit mehreren axial gerichteten Schraubbolzen beinhaltet.

## Revendications

1. Système de montage de pales d'éolienne destiné à être utilisé avec des pales d'éolienne à pas variable (100) ayant des talons de pale coniques, **caractérisé par** le fait de comprendre :
un ensemble de paliers à haute capacité (106) monté dans une structure de coiffe d'éolienne (20) pour chaque pale d'éolienne (100), chaque ensemble de paliers à haute capacité étant configuré avec un manchon interne conique à ouverture vers l'extérieur (105) pour s'engager de manière coaxiale avec une section de tige conique (104) d'une pale d'éolienne associée dans un accouplement à verrouillage automatique pour la rotation autour d'un axe de pale X-X perpendiculaire à un axe de rotation de support de coiffe, facilitant de ce fait l'assemblage et le désassemblage des pales d'éolienne de la structure de coiffe d'éolienne (20).

2. Système de montage de pales d'éolienne selon la revendication 1, dans lequel chaque ensemble de paliers à haute capacité (106) inclut un ensemble d'éléments de roulement (112A, 112B) disposés au sein de voies internes et externes (114, 116) entre le manchon interne conique (105) et une cartouche de palier de support (110) accouplée à ladite structure de coiffe (20), ledit ensemble d'éléments de roulement permettant audit manchon interne conique (105) et à une section de tige conique accouplée (104) d'une pale d'éolienne (100) de tourner autour de l'axe de pale X-X pour la commande du pas de pale.

3. Système de montage de pales d'éolienne selon la revendication 2, dans lequel un réglage de charge préalable sur ledit ensemble d'éléments de roulement (112A, 112B) est sélectionné par un écarteur annulaire (118) disposé entre ledit manchon interne conique (105) et une voie interne (116A, 116B).

4. Système de montage de pales d'éolienne selon la revendication 2, dans lequel ladite section de tige conique (104) de ladite pale d'éolienne (100) est accouplée axialement à une couronne principale (108), ladite couronne principale (108) étant configurée pour être entraînée à rotation autour dudit axe de pale X-X afin de permettre l'ajustement de pas de ladite pale d'éolienne (100).

5. Système de montage de pales d'éolienne selon la revendication 2, dans lequel ledit ensemble d'éléments de roulement (112A, 112B) est disposé dans une pluralité de rangées espacées axialement.

6. Système de montage de pales d'éolienne selon la revendication 5, dans lequel ledit ensemble d'éléments de roulement (112A, 112B) inclut au moins deux rangées de rouleaux coniques agencés dans une configuration de montage indirecte.

7. Système de montage de pales d'éolienne selon la revendication 6, dans lequel ledit ensemble d'éléments de roulement (112A, 112B) inclut au moins deux rangées de rouleaux coniques agencés dans une configuration de montage directe.

8. Système de montage de pales d'éolienne selon la revendication 1, incluant en outre une goupille de levage (122) accouplée axialement à une extrémité axiale de la section de tige conique (104) de la pale d'éolienne (100), ladite goupille de levage étant adaptée à s'accoupler de manière amovible à un câble de levage pour faciliter l'engagement et le désengagement de ladite section de tige conique (104) dudit manchon interne conique (105) dudit ensemble de paliers (106).

9. Système de montage de pales d'éolienne selon la revendication 1, dans lequel ledit manchon interne conique (105) et ledit ensemble de paliers (106) sont portés à rotation autour d'un axe de rotation de support par la structure de coiffe 20.

10. Système de montage de pales d'éolienne selon la revendication 1, dans lequel ledit manchon interne conique (105) inclut au moins un passage dirigé axialement (124) s'étendant d'une surface d'extrémité de base à un canal circonférentiel (126) sur ladite surface interne conique, ledit passage dirigé axialement étant configuré pour recevoir un flux de fluide hydraulique de ladite extrémité de base pour la livraison à une interface entre ladite surface interne conique et une section de tige conique (104) d'une pale d'éolienne installée (100) assise en son sein afin de faciliter la libération dudit cône à verrouillage automatique au cours du désengagement de ladite pale d'éolienne dudit manchon interne conique (105).

11. Système de montage de pales d'éolienne selon la revendication 1, dans lequel ledit manchon interne conique (105) et ladite section de tige conique (104) de ladite pale d'éolienne ont un cône de verrouillage avec un rapport de pente de 1/12.

12. Procédé d'installation d'une pale d'éolienne à pas variable (100) sur une structure de coiffe à pas ajustable (20), **caractérisé par** le fait de :
fournir, pour chaque pale d'éolienne à pas variable associée à ladite structure de coiffe (20), un ensemble de paliers à haute capacité (106), chaque ensemble de paliers à haute capacité étant configuré avec un manchon interne conique à ouverture vers l'extérieur (105) pour s'engager de manière coaxiale avec une section de tige conique (104) d'une pale d'éolienne associée dans un accouplement à verrouillage automatique pour la rotation autour d'un axe de pale X-X perpendiculaire à un axe de rotation de support de coiffe,
asseoir ladite section de tige conique (104) de ladite pale d'éolienne à pas variable (100) de manière coaxiale au sein dudit manchon interne conique (105) dudit ensemble de paliers à haute capacité (106) ; et
tirer ladite section de tige conique (104) dans un engagement de verrouillage avec ledit manchon interne conique (105).

13. Procédé d'installation selon la revendication 12, incluant en outre l'étape consistant à fixer ladite pale d'éolienne (100) dans ledit engagement de verrouillage avec ledit manchon interne conique (105) dudit ensemble de paliers à haute capacité (106) avec une pluralité de boulons dirigés axialement.
